# EUROPÄISCHE PATENTSCHRIFT

(11) **EP 0 523 468 B1**
(45) Veröffentlichungstag und Bekanntmachung des Hinweises auf die Patenterteilung: **09.10.1996**
(21) Anmeldenummer: 92111272.8
(22) Anmeldetag: 03.07.1992
(51) Int. Cl.: C08G 73/10, C08G 77/455, C08G 77/388

(54) **Siliconimide**
Silicone imides
Silicone imides

(30) Priorität: 16.07.1991 DE 4123574
(43) Veröffentlichungstag der Anmeldung: 20.01.1993
(73) Patentinhaber: SIEMENS AKTIENGESELLSCHAFT, 80333 München (DE)
(72) Erfinder: Stapp, Bernhard, Dr., W-8501 Kalchreuth (DE); Datz, Armin, Dr., W-8521 Poxdorf (DE); Muhrer, Volker, Dipl.-Ing., W-8510 Fürth (DE); Mösges, Gabriele, verstorben (DE)

(56) Entgegenhaltungen:
- EP-A- 0 303 069
- DE-A- 3 447 457
- DE-A- 3 701 249
- GB-A- 2 158 083
- PATENT ABSTRACTS OF JAPAN vol. 15, no. 60 (C-805)13. Februar 1991

## Beschreibung

Die Erfindung betrifft neue funktionelle Siliconimide sowie deren Herstellung.

Insbesondere betrifft die Erfindung vernetzbare funktionelle Gruppen aufweisende Siliconimide der allgemeinen Formel 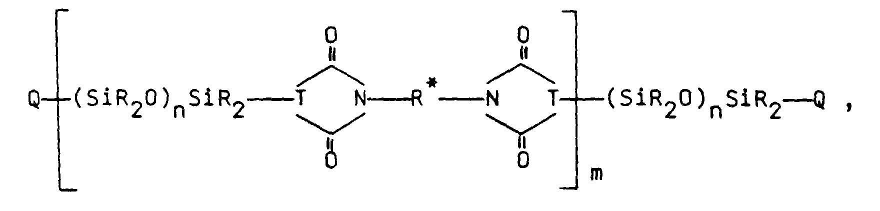 worin Q = Q¹ oder Q² ,
mit 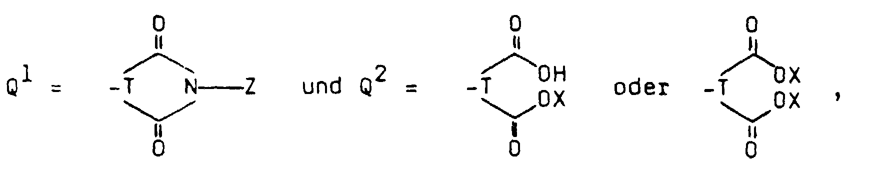
- m: eine ganze Zahl von 0 bis 10 (bei Q = Q¹) bzw. von 1 bis 10 (bei Q = Q²) und
- n: eine ganze Zahl von 1 bis 50 ist,
und für die Gruppen R, R*, T, X und Z folgendes gilt:
R = Alkyl, Cycloalkyl, Aryl, Aralkyl oder Alkaryl;
R* = -(CH₂)₆- , -CH₂-C(CH₃)₂-CH₂-CHCH₃-(CH₂)₂- , 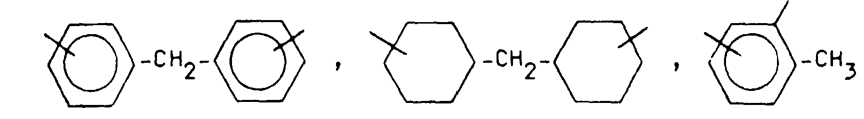 oder 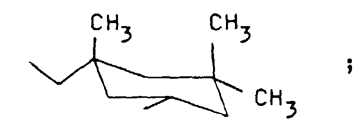 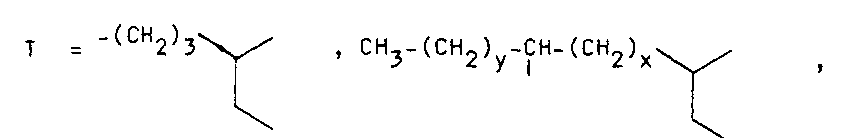 x = 1 oder 2
y = 0 oder 1 ... 16 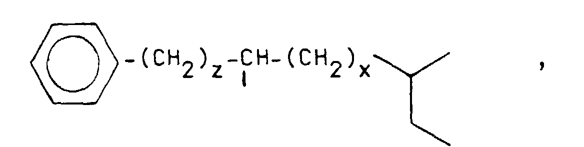 x = 1 oder 2 z = 0 oder 1 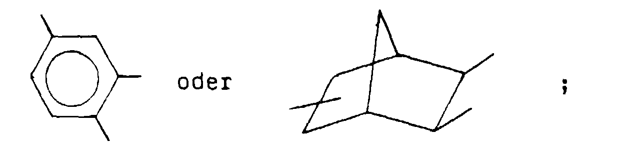 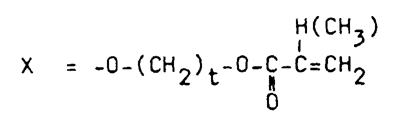 mit t = 2, 3 oder 4 ;

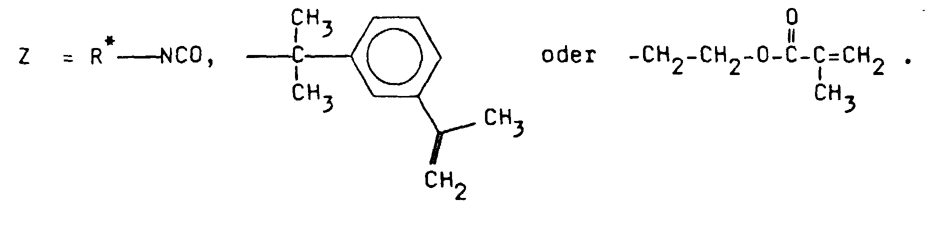

Die Reste R stellen Alkyl-, Cycloalkyl-, Aryl-, Aralkyl- oder Alkarylgruppen dar, wobei diese Gruppen unsubstituiert oder substituiert sein können. Beispielhaft seien für die Reste R folgende Gruppen genannt:
- Alkyl mit 1 bis 4 C-Atomen, wie Methyl, Ethyl, Propyl, Isopropyl, Butyl und Isobutyl, wobei der Methylrest bevorzugt ist;
- Cycloalkyl mit 5 bis 8 C-Atomen, wie Cyclohexyl, Methylcyclohexyl und Cycloheptyl;
- Aryl mit 6 bis 10 C-Atomen, wie Phenyl und Naphthyl;
- Aralkyl, wie β-Phenylethyl, β-Phenylpropyl, o-Methylphenylethyl, 3,5-Dimethylphenylethyl, p-Nonylphenylethyl, o-Bromphenylethyl, 3,5-Dibromphenylethyl, p-Chlorphenylethyl und 3,5-Dichlorphenylethyl;
- Alkaryl, wie Tolyl.

Die erfindungsgemäßen Verbindungen sind neue oligomere Siliconimide mit vernetzbaren Funktionen, d.h. Prepolymere, die entweder direkt oder durch Reaktion mit anderen ungesättigten Verbindungen gehärtet werden können. Sind die vernetzbaren Funktionen (Meth)acrylatgruppen, so können diese beispielsweise einer thermisch oder UV-initiierten radikalischen Polymerisation unterworfen werden. Die Härtung von isocyanat- bzw. isopropenylfunktionellen Siliconimiden kann in vielfältiger, dem Fachmann bekannter Weise erfolgen. So können beispielsweise Isocyanate zu Polyisocyanuraten gehärtet oder mit Alkoholen in Polyurethane umgewandelt werden, sie können aber auch - in Verbindung mit Epoxiden - zu Oxazolidinonstrukturen enthaltenden Netzwerkpolymeren umgesetzt werden.

Polyimide sind technisch vielseitig genutzte Kunststoffe. Zur Herstellung von Polyimiden sind verschiedene Methoden bekannt, wobei die Herstellung insbesondere in einer zweistufigen Polykondensationsreaktion eines Tetracarbonsäuredianhydrids mit einem Diamin in Lösung erfolgt. In der ersten Stufe wird dabei eine Polyamidocarbonsäure erhalten, die in der zweiten Stufe thermisch - bei Temperaturen bis 400°C - oder chemisch - mit dehydratisierenden Agenzien - unter Wasserabspaltung in das Polyimid übergeführt wird. Nach diesem Verfahren können sowohl rein kohlenstofforganische Polyimide als auch Siliconimide hergestellt werden. Die Herstellung von Siliconimiden aus organischen Anhydriden und aminofunktionellen Siliconen wird beispielsweise in den US-Patentschriften 3 325 450, 3 847 867 und 4 558 110 beschrieben. Aus der DE-OS 38 03 088, der US-PS 4 404 350 und der US-PS 4 794 153 ist die Herstellung von Siliconimiden aus anhydridfunktionellen Siliconen und organischen Diaminen bekannt.

Eine weitere Möglichkeit zur Herstellung von Polyimiden besteht in der Umsetzung von Isocyanaten mit Carbonsäureanhydriden unter Kohlendioxidabspaltung (siehe beispielsweise US-PS 4 021 412). Lewissäuren und tertiäre Amine katalysieren diese Reaktion, aber auch der Zusatz geringer Mengen von Alkohol oder Wasser soll sich vorteilhaft auswirken (siehe dazu: DE-OS 19 58 900 sowie "Polym. Prepr.", Vol. 9 (1968), Seiten 1581 bis 1586).

Aus der DE-OS 37 01 249 ist ein Verfahren zur Herstellung alkoxy- und aryloxysubstituierter aromatischer Polyimide bekannt, bei dem in einer Vorreaktion mit 1,3-Imidazol blockierte aromatische Diisocyanate hergestellt werden, die anschließend in einem dipolar aprotischen Lösungsmittel, zweckmäßigerweise in Gegenwart eines Katalysators, mit aromatischen Tetracarbonsäuredianhydriden zur Reaktion gebracht werden. Die auf diese Weise in Lösung hergestellten hochmolekularen, rein kohlenstofforganischen Polyimide, die keine vernetzungsfähigen Funktionen aufweisen, können aus der Lösung verarbeitet werden bzw. sind in der Schmelze plastisch verformbar.

Die Siliconimide nach der Erfindung werden ausgehend von Silicontetracarbonsäuredianhydriden der allgemeinen Formel 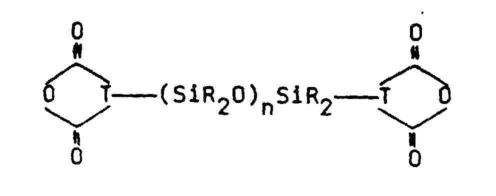 worin R, T und n die vorstehend angegebene Bedeutung haben, hergestellt.

Silicontetracarbonsäuredianhydride der genannten Art können beispielsweise auf direktem Weg durch Hydrosilylierung der Allylfunktion von Allylbernsteinsäureanhydrid (siehe dazu DE-OS 34 47 457), durch Hydrosilylierung der olefinischen Doppelbindung von Norbornendicarbonsäureanhydrid (siehe dazu US-PS 4 381 396) oder durch Hydrosilylierung von Alkenylbernsteinsäureanhydrid hergestellt werden; die Darstellung von Alkenylbernsteinsäureanhydrid ist beispielsweise in "Angew. Makromol. Chem.", Bd. 185/186 (1991), Seiten 129 bis 136 beschrieben. Die Hydrosilylierung erfolgt dabei - in Gegenwart von Platinkatalysatoren - mit Polyorganosiloxanen, die endständig Si-gebundenen Wasserstoff tragen. In diesem Zusammenhang sei darauf hingewiesen, daß es möglich ist, den Organosiloxananteil von anhydridfunktionellen Di- und Polysiloxanen durch Äquilibrierung mit Organocyclopolysiloxanen, wie Octamethylcyclotetrasiloxan, in Gegenwart eines geeigneten Äquilibrierungskatalysators zu modifizieren (siehe dazu "Macromolecules", Vol. 20 (1987), Seiten 694 bis 696). Eine Darstellungsmethode für Polysiloxane mit Phthalsäureanhydrid-Funktionen findet sich in "J. Org. Chem.", Vol. 38 (1973), Seiten 4271 bis 4274.

Die Herstellung der vernetzbaren Siliconimide nach der Erfindung beruht auf der Erkenntnis, daß anhydridfunktionelle Siloxane der vorstehend genannten Art mit blockierten Isocyanaten zu Siliconimiden umgesetzt werden können. Unter "blockierten" Isocyanaten werden dabei Verbindungen verstanden, deren NCO-Gruppen mit einem Blockierungsmittel in Form einer aktiven Wasserstoff aufweisenden Verbindung (A-H) umgesetzt werden (Bildung von -NH-CO-A).

Die erfindungsgemäßen Siliconimide werden bei relativ niederen Temperaturen hergestellt, womit der begrenzten thermischen Belastbarkeit der funktionellen Gruppen dieser Verbindungen Rechnung getragen wird. Die Umsetzung zwischen den anhydridfunktionellen Siloxanen und den blockierten Isocyanaten erfolgt - je nach Konstitution der eingesetzten Isocyanat-Addukte - bei Temperaturen zwischen Raumtemperatur und 140°C, vorzugsweise bei Temperaturen zwischen 70 und 110°C; das Fortschreiten der Reaktion kann dabei anhand der freigesetzten Menge an Kohlendioxid verfolgt werden. Die Reaktion selbst kann - je nach Mischbarkeit der Ausgangskomponenten - ohne Lösungsmittel oder unter Zusatz von organischen Lösungsmitteln erfolgen.

Als Blockierungsmittel dienen insbesondere folgende Verbindungen: Imidazol und Imidazolderivate, wie Ethylimidazol, Benzotriazol, Phenol, Salicylsäuremethylester und Oxime, wie 2-Propanonoxim, 2-Butanonoxim, 3-Pentanonoxim, 2- bzw. 3-Hexanonoxim, Cyclopentanonoxim, Cyclohexanonoxim, Acetophenonoxim und Benzophenonoxim; bevorzugt werden dabei Imidazol und 2-Butanonoxim. Die Umsetzung mit dem Isocyanat erfolgt im Molverhältnis NCO:Blockierungsmittel, d.h. aktiver Wasserstoff, wie 1:1.

Die Imidazoladdukte der Isocyanate werden in an sich bekannter Weise durch Umsetzung von äquimolaren Mengen einer Isocyanatverbindung mit Imidazol hergestellt (siehe dazu: "Liebigs Ann. Chem.", Bd. 648 (1961), Seiten 72 bis 82). Die Reaktion erfolgt folgt dabei vorzugsweise in inerten Lösungsmitteln, wie Tetrahydrofuran und Toluol, und bei Raumtemperatur; die Umsetzungsprodukte können als Feststoff isoliert werden. Die Oximaddukte der Isocyanate werden - in einer dem Fachmann bekannten Weise - durch Umsetzung äquimolarer Mengen einer Isocyanatverbindung und eines Oxims, wie 2-Butanonoxim, hergestellt.

Als Diisocyanate dienen beim erfindungsgemäßen Verfahren vorzugsweise folgende Verbindungen: Hexamethylendiisocyanat, Trimethylhexamethylendiisocyanat, Diphenylmethandiisocyanat, Dicyclohexyldiisocyanat, Toluylendiisocyanat und Isophorondiisocyanat.

Die Siliconimide nach der Erfindung, die vernetzbare funktionelle Gruppen aufweisen, können auf verschiedene Weise hergestellt werden. Bei einer Methode wird in einem ersten Verfahrensschritt ein Diisocyanat der Formel OCN-R*-NCO, worin R* die vorstehend angegebene Bedeutung hat, mit einem Blockierungsmittel in Form einer aktiven Wasserstoff aufweisenden Verbindung im Molverhältnis 1:2 umgesetzt. Das dabei erhaltene blockierte Diisocyanat wird dann in einem zweiten Reaktionsschritt mit einem anhydridfunktionellen Silicon der vorstehend genannten Art im Molverhältnis von 1,1:1 bis 2:1 zur Reaktion gebracht. Die Reaktionsprodukte stellen erfindungsgemäße Verbindungen dar und sind im Mittel linear aufgebaute Siliconimid-Blockcopolymere, die - abhängig von den Isocyanat-Addukten und den Reaktionsbedingungen - endständig Isocyanatgruppen oder teilweise blockierte Isocyanatgruppen tragen.

Ein weiteres Merkmal der Erfindung ist, daß die isocyanatfunktionellen Siliconimide auch mit olefinisch ungesättigten Anhydriden in vernetzbare Siliconimide überführt werden können. Beispielhaft für geeignete olefinisch ungesättigte Anhydride seien genannt: 5-Norbornen-2,3-dicarbonsäureanhydrid, 4-Cyclohexen-1,2-dicarbonsäureanhydrid, Maleinsäureanhydrid und Allylbernsteinsäureanhydrid. Die Umsetzung mit den olefinisch ungesättigten Anhydriden erfolgt in entsprechender Weise wie bei den anhydridfunktionellen Siliconen, d.h. eine blockierte NCO-Gruppe reagiert mit der Anhydridgruppe zum Imid.

Bei einer zweiten Methode zur Herstellung der erfindungsgemäßen Siliconimide werden die Diisocyanate - in Form der daraus hergestellten Blockierungsaddukte - mit den anhydridfunktionellen Siliconen im Molverhältnis von 1:1,1 bis 1:2 zur Reaktion gebracht. Die dabei erhaltenen Produkte sind im Mittel linear aufgebaute, endständig anhydridfunktionelle Siliconimid-Blockcopolymere. Zu Verbindungen gemäß der Erfindung gelangt man, wenn die Anhydridgruppen dieser Siliconimide zumindest teilweise in (Meth)acrylatgruppen übergeführt werden. Dies geschieht - in an sich bekannter Weise (siehe dazu: DE-OS 28 09 874 und DE-OS 34 47 457) - durch Umsetzung mit hydroxyfunktionellen (Meth)acrylaten zu den entsprechenden ungesättigten Mono- oder Diestern.

Als hydroxyfunktionelle (Meth)acrylate, d.h. olefinisch ungesättigte Alkohole, dienen vorzugsweise Hydroxyethyl-(meth)acrylat, Hydroxypropyl-(meth)acrylat und Hydroxybutyl-(meth)acrylat. Daneben können aber auch die mehrfachen (Meth)acrylsäureester von Pentaerythrit, Trimethylolethan, Trimethylolpropan und Glycerin sowie deren Dimere Verwendung finden.

Eine weitere Möglichkeit, die endständig anhydridfunktionellen Siliconimid-Copolymeren in erfindungsgemäße Verbindungen überzuführen, besteht in der Umsetzung mit einem blockierten Monoisocyanat in Form von m-Isopropenyl-α,α'-dimethylbenzylisocyanat oder Isocyanatoethylmethacrylat. Im ersten Fall erhält man dabei isopropenylfunktionelle Siliconimide, im zweiten Fall methacrylatfunktionelle Siliconimide. Durch Umsetzung mit Allylisocyanat können auch allylfunktionelle Siliconimide hergestellt werden.

Bei einer weiteren Ausführungsform des erfindungsgemäßen Verfahrens werden isopropenyl- bzw. methacrylatfunktionelle Siliconimide in der Weise hergestellt, daß die blockierten Monoisocyanate der vorstehend genannten Art mit den anhydridfunktionellen Siloxanen im Molverhältnis von 2:1 zur Reaktion gebracht werden.

Die Eigenschaften der erfindungsgemäßen Siliconimide werden vom Verhältnis der kohlenstofforganischen zu den siliciumorganischen Strukturen bestimmt. Ein Aspekt der Erfindung besteht deshalb darin, bei der Herstellung der Siliconimide die anhydridfunktionellen Silicone in Kombination mit kohlenstofforganischen Anhydriden, wie Pyromellithsäuredianhydrid und/oder 3,3',4,4'-Benzophenontetracarbonsäuredianhydrid und/oder Oxy-bis(4-phthalsäureanhydrid) einzusetzen. Vorteilhaft ist es, die anhydridfunktionellen Silicone in der jeweiligen Reaktionsmischung bis zu einem Gehalt von 50 Mol-%, vorzugsweise bis zu 30 Mol-%, durch kohlenstofforganische Anhydride zu ersetzen.

Anhand von Ausführungsbeispielen soll die Erfindung noch näher erläutert werden.

### Beispiel 1

### Herstellung eines Silicontetracarbonsäuredianhydrids

In einem mit Rückflußkühler, Rührer, Tropftrichter und Innenthermometer versehenen Rundkolben werden 58 g Hexadecamethyloctasiloxan (0,1 mol), 100 ml Toluol und 0,5 ml einer Lösung eines Platin/Divinyltetramethyldisiloxan-Komplexes (Lösung in Xylol mit 3 bis 3,5 % Pt, berechnet als Element) gegeben. Zu diesem Gemisch wird bei 90°C unter Rühren eine Mischung von 32,8 g cis-5-Norbornen-endo-2,3-dicarbonsäureanhydrid (0,2 mol) und 100 ml Toluol innerhalb von 2 h zugetropft. Nach jeweils 12stündigem Erhitzen bei 90°C und unter Rückfluß ist die Reaktion beendet. Die Reaktionslösung wird dann mit Aktivkohle versetzt und filtriert. Nach dem Entfernen des Lösungsmittels bei 50°C im Vakuum (bei einem Druck von 0,1 mbar) werden 86 g α,ω-Silicon-bis-norbornandicarbonsäureanhydrid erhalten (Viskosität bei 25°C: 600 mPa.s). Die IR- und ¹³C-NMR-Daten bestätigen folgende Struktur:

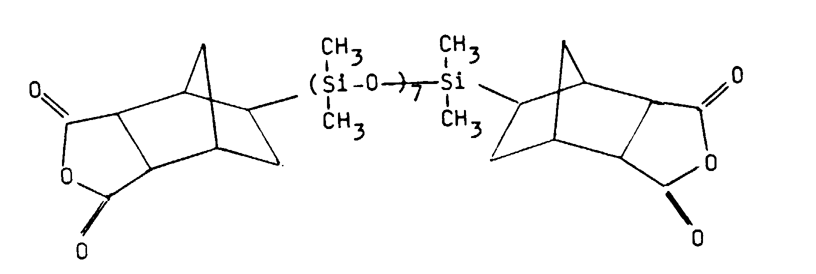

### Beispiel 2

### Herstellung eines blockierten Diisocyanats

Zu einer Lösung von 13,6 g Imidazol (0,2 mol) in 100 ml Tetrahydrofuran wird bei Raumtemperatur unter Rühren eine Lösung von 25 g 4,4'-Diphenylmethandiisocyanat (0,1 mol) in 50 ml Tetrahydrofuran gegeben. Nach Abklingen der dabei erfolgenden exothermen Reaktion wird noch 1 h bei 60°C gerührt. Nach dem Abkühlen der Lösung wird das abgeschiedene Produkt abfiltriert und getrocknet (Schmelzpunkt: 185°C). Die IR- und¹³C-NMR-Daten bestätigen die Struktur des 4,4'-Bis(imidazolylcarbonsäure-1-amido)-diphenylmethans.

### Beispiel 3

### Herstellung eines anhydridfunktionellen Siliconimids

90,7 g des nach Beispiel 1 hergestellten α,ω-Silicon-bis-norbornandicarbonsäureanhydrids (0,1 mol) werden in einem Rundkolben mit 19,3 g des nach Beispiel 2 hergestellten blockierten Diisocyanats (0,05 mol) vermischt, und das Gemisch wird dann innerhalb von 5 min auf 90°C erhitzt. Wenn die volumetrisch bestimmte Menge des sich bei der dabei stattfindenden Reaktion bildenden Kohlendioxids konstant bleibt, wird durch ein Membranfilter (Porenweite: 0,45 µm) abfiltriert. Vom Filtrat wird restliches Imidazol bei 90°C im Vakuum absublimiert. Die IR- und ¹³C-NMR-Daten bestätigen die Struktur des entstandenen anhydridfunktionellen Siliconimids (Viskosität bei 25°C: 30 Pa.s).

### Beispiel 4

### Herstellung eines acrylatfunktionellen Siliconimids

In einen mit einem Tropftrichter versehenen Rundkolben werden 22 g des nach Beispiel 3 hergestellten anhydridfunktionellen Siliconimids (0,01 mol), 0,01 g Phenothiazin und 100 ml Toluol gegeben. Zu der Mischung wird bei 90°C eine Lösung von 4,64 g Hydroxyethylacrylat (0,04 mol) in 100 ml Toluol innerhalb von 1 h zugetropft. Nach 2stündigem Rühren bei 100°C wird das Lösungsmittel im Vakuum entfernt. Die IR-Daten bestätigen die Struktur des entstandenen acrylatfunktionellen Siliconimids.

### Beispiel 5

### Herstellung eines isocyanatfunktionellen Siliconimids

36 g des nach Beispiel 1 hergestellten α,ω-Silicon-bis-norbornandicarbonsäureanhydrids (0,04 mol) werden in einem Rundkolben mit 18 g imidazolblockiertem Hexamethylendiisocyanat (0,06 mol) vermischt, und das Gemisch wird dann innerhalb von 5 h auf 90°C erhitzt. Wenn die volumetrisch bestimmte Menge des sich bei der dabei stattfindenden Reaktion bildenden Kohlendioxids konstant bleibt, wird das Imidazol bei 130°C im Vakuum absublimiert. Die IR- und ¹³C-NMR-Daten bestätigen die Struktur des entstandenen isocyanatfunktionellen Siliconimids (Viskosität bei 25°C: 600 Pa.s).

### Beispiel 6

### Herstellung eines isocyanatfunktionellen Siliconimids

19,6 g des nach Beispiel 3 hergestellten anhydridfunktionellen Siliconimids (0,01 mol) werden in einem Rundkolben mit 6,2 g imidazolblockiertem Toluylendiisocyanat (0,02 mol), gelöst in 10 ml Dimethylacetamid, vermischt, und das Gemisch wird dann innerhalb von 5 min auf 100°C erhitzt. Wenn die volumetrisch bestimmte Menge des sich bei der dabei stattfindenden Reaktion bildenden Kohlendioxids konstant bleibt, wird durch ein Membranfilter (Porenweite: 0,45 µm) abfiltriert. Vom Filtrat wird restliches Imidazol bei 130°C im Vakuum absublimiert. Die IR- und ^{l3}C-NHR-Daten bestätigen die Struktur des entstandenen isocyanatfunktionellen Siliconimids.

### Beispiel 7

### Herstellung eines blockierten Monoisocyanats

Zu einer Lösung von 13,6 g Imidazol (0,2 mol) in 50 ml Tetrahydrofuran werden bei Raumtemperatur unter Rühren 40,2 g m-Isopropenyl-α,α'-dimethylbenzylisocyanat (0,2 mol) gegeben. Nach Abklingen der dabei erfolgenden exothermen Reaktion wird noch 1 h bei 60°C gerührt. Die Lösung wird anschließend auf die Hälfte eingeengt und abgekühlt, und das dabei ausfallende Produkt wird dann abfiltriert und getrocknet (Schmelzpunkt: 108°C). Die IR- und ¹³C-NMR-Daten bestätigen die Struktur des Imidazol-1-carbonsäure-m-isopropenyl-α,α'-dimethylbenzylamids.

### Beispiel 8

### Herstellung eines isopropenylfunktionellen Siliconimids

19,6 g des nach Beispiel 3 hergestellten anhydridfunktionellen Siliconimids (0,01 mol) werden in einem Rundkolben mit 5,35 g des nach Beispiel 7 hergestellten blockierten Monoisocyanats (0,02 mol) vermischt, und das Gemisch wird dann innerhalb von 5 min auf 90°C erhitzt. Wenn die volumetrisch bestimmte Menge des sich bei der dabei stattfindenden Reaktion bildenden Kohlendioxids konstant bleibt, wird durch ein Membranfilter (Porenweite: 0,45 µm) abfiltriert. Vom Filtrat wird restliches Imidazol bei 100°C im Vakuum absublimiert. Die IR- und ¹³C-NMR-Daten bestätigen die Struktur des entstandenen isopropenylfunktionellen Siliconimids.

### Beispiel 9

### Herstellung eines isopropenylfunktionellen Siliconimids

17,1 g α,ω-Silicon-bis-propylbernsteinsäureanhydrid (0,02 mol) werden in einem Rundkolben mit 10,7 g des nach Beispiel 7 hergestellten blockierten Monoisocyanats (0,04 mol) und 0,01 g Phenothiazin vermischt, und das Gemisch wird dann innerhalb von 5 min auf 100°C erhitzt. Wenn die volumetrisch bestimmte Menge des sich bei der dabei stattfindenden Reaktion bildenden Kohlendioxids konstant bleibt, wird das Imidazol bei 100°C im Vakuum absublimiert. Die IR- und ¹³C-NMR-Daten bestätigen die Struktur des dabei entstandenen isopropenylfunktionellen Siliconimids.

## Patentansprüche

1. Vernetzbare funktionelle Gruppen aufweisende Siliconimide der allgemeinen Formel 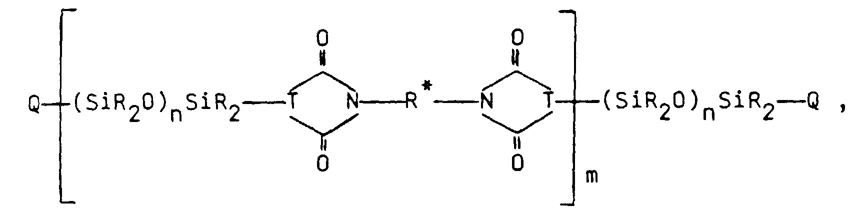 worin Q = Q¹ oder Q² ,
mit 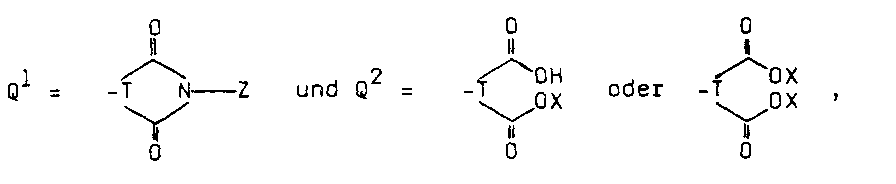
m eine ganze Zahl von 0 bis 10 (bei Q = Q¹) bzw. von 1 bis (bei Q = Q²) und
n eine ganze Zahl von 1 bis 50 ist,
und für die Gruppen R, R*, T, X und Z folgendes gilt:
R = Alkyl, Cycloalkyl, Aryl, Aralkyl oder Alkaryl;
R* = -(CH₂)₆- , -CH₂-C(CH₃)₂-CH₂-CHCH₃-(CH₂)₂-, 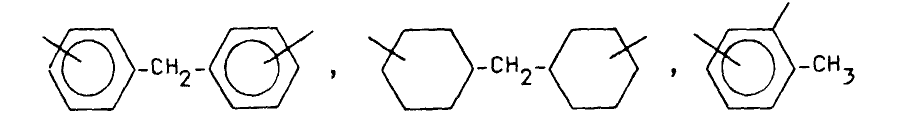 oder 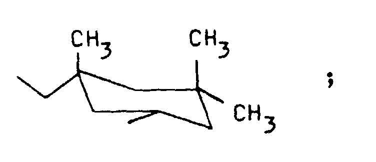 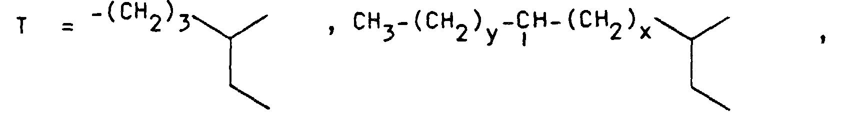 x = 1 oder 2
y = 0 oder 1 ... 16 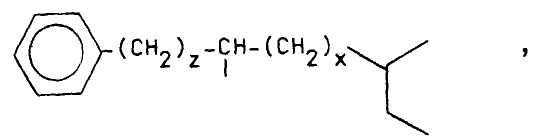 x = 1 oder 2
z = 0 oder 1 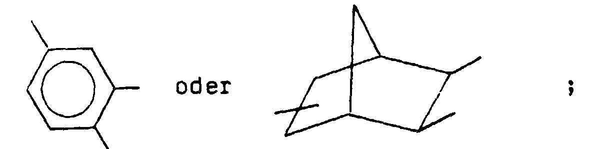 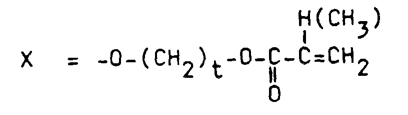 mit t = 2,3 oder 4 ;

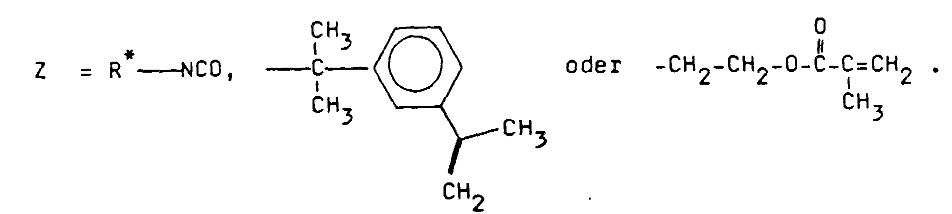

2. Verfahren zur Herstellung von Siliconimiden nach Anspruch 1, **dadurch gekennzeichnet**, daß in einem ersten Reaktionsschritt ein Diisocyanat der Formel OCN-R*-NCO, worin R* die vorstehend angegebene Bedeutung hat, mit einem Blockierungsmittel in Form einer aktiven Wasserstoff aufweisenden Verbindung im Molverhältnis 1:2 umgesetzt wird, und daß das dabei erhaltene blockierte Diisocyanat in einem zweiten Reaktionsschritt mit einem Silicontetracarbonsäuredianhydrid der allgemeinen Formel 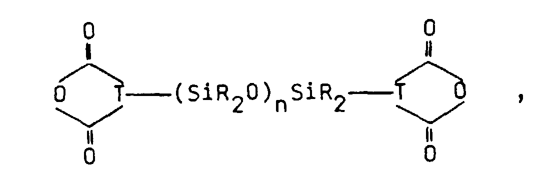 worin R, T und n die vorstehend angegebene Bedeutung haben, im Molverhältnis 1,1:1 bis 2:1 zu einem isocyanatfunktionellen Siliconimid umgesetzt wird.

3. Verfahren zur Herstellung von Siliconimiden nach Anspruch 1, **dadurch gekennzeichnet,** daß in einem ersten Reaktionsschritt ein Diisocyanat der Formel OCN-R*-NCO, worin R* die vorstehend angegebene Bedeutung hat, mit einem Blockierungsmittel in Form einer aktiven Wasserstoff aufweisenden Verbindung im Molverhältnis 1:2 umgesetzt wird, daß das dabei erhaltene blockierte Diisocyanat in einem zweiten Reaktionsschritt mit einem Silicontetracarbonsäuredianhydrid der allgemeinen Formel 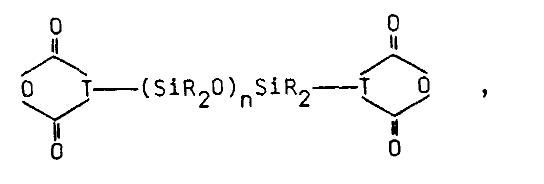 worin R, T und n die vorstehend angegebene Bedeutung haben, im Molverhältnis 1:1,1 bis 1:2 zu einem anhydridfunktionellen Siliconimid umgesetzt wird, und daß die Anhydridgruppen dieses Siliconimids nachfolgend wenigstens teilweise mit einem hydroxyfunktionellen (Meth)acrylat zur Reaktion gebracht werden.

4. Verfahren nach Anspruch 3, **dadurch gekennzeichnet,** daß als hydroxyfunktionelles (Meth)acrylat Hydroxyethyl-(meth)acrylat, Hydroxypropyl-(meth)acrylat oder Hydroxybutyl-(meth)acrylat verwendet wird.

5. Verfahren zur Herstellung von Siliconimiden nach Anspruch 1, **dadurch gekennzeichnet**, daß in einem ersten Reaktionsschritt ein Diisocyanat der Formel OCN-R*-NCO, worin R* die vorstehend angegebene Bedeutung hat, mit einem Blockierungsmittel in Form einer aktiven Wasserstoff aufweisenden Verbindung im Molverhältnis 1:2 umgesetzt wird, daß das dabei erhaltene blockierte Diisocyanat in einem zweiten Reaktionsschritt mit einem Silicontetracarbonsäuredianhydrid der allgemeinen Formel 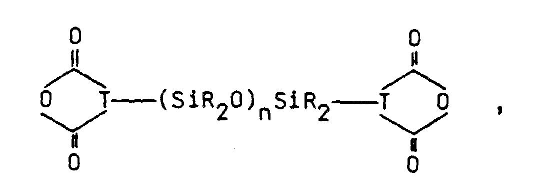 worin R, T und n die vorstehend angegebene Bedeutung haben, im Molverhältnis 1:1,1 bis 1:2 zu einem anhydridfunktionellen Siliconimid umgesetzt wird, und daß das anhydridfunktionelle Siliconimid nachfolgend mit einem - mit einem Blockierungsmittel in Form einer aktiven Wasserstoff aufweisenden Verbindung blockierten - Monoisocyanat der Struktur 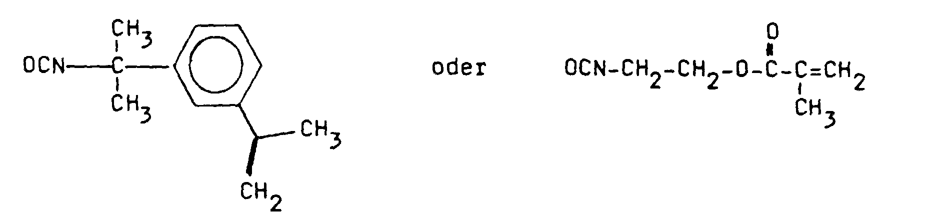 zur Reaktion gebracht wird.

6. Verfahren nach einem der Ansprüche 2 bis 5, **dadurch gekennzeichnet**, daß als Diisocyanat Hexamethylendiisocyanat, Trimethylhexamethylendiisocyanat, Diphenylmethandiisocyanat, Dicyclohexylmethandiisocyanat, Toluylendiisocyanat oder Isophorondiisocyanat verwendet wird.

7. Verfahren zur Herstellung von Siliconimiden nach Anspruch 1, **dadurch gekennzeichnet**, daß in einem ersten Reaktionsschritt ein Monoisocyanat der Struktur 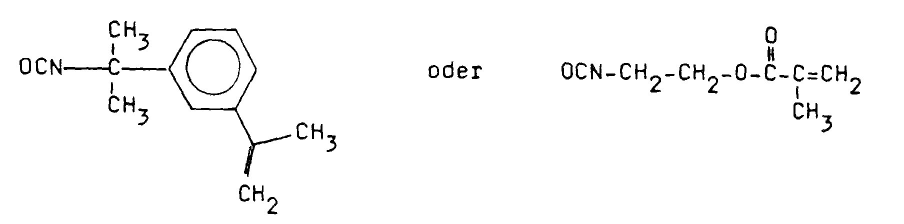 mit einem Blockierungsmittel in Form einer aktiven Wasserstoff aufweisenden Verbindung im Molverhältnis 1:1 umgesetzt wird, und daß das dabei erhaltene blockierte Monoisocyanat in einem zweiten Reaktionsschritt mit einem Silicontetracarbonsäuredianhydrid der allgemeinen Formel 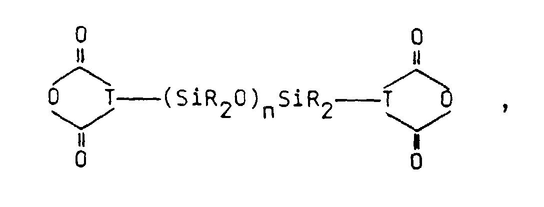 worin R, T und n die vorstehend angegebene Bedeutung haben, im Molverhältnis 2:1 zu einem Siliconimid umgesetzt wird.

8. Verfahren nach einem der Ansprüche 2 bis 7, **dadurch gekennzeichnet**, daß als Silicontetracarbonsäuredianhydrid Silicon-bis-alkylbernsteinsäureanhydrid, Siliconbis-norbornandicarbonsäureanhydrid oder Silicon-bis-phthalsäureanhydrid verwendet wird.

## Claims

1. Silicone imides having cross-linkable functional groups and having the general formula: 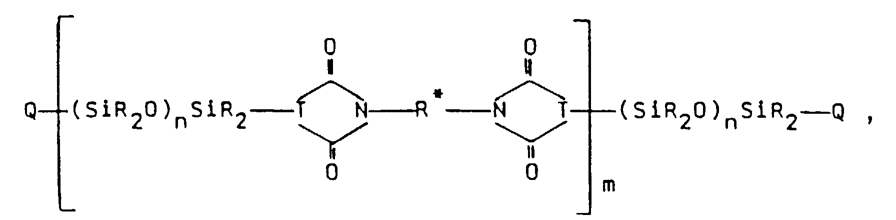 in which Q = Q¹ or Q², with 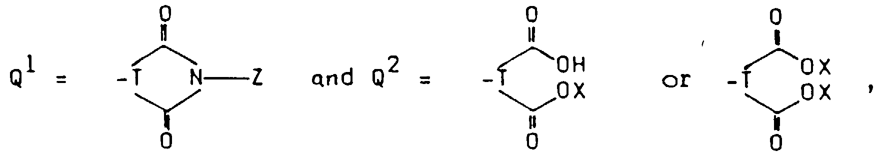
m is an integer from 0 to 10 (when Q = Q¹) or from 1 to 10 (when Q = Q²) and
n is an integer from 1 to 50,
and for the groups R, R*, T, X and Z the following conditions apply:
R = alkyl, cycloalkyl, aryl, aralkyl or alkaryl;
R* = -(CH₂)₆- , -CH₂-C(CH₃)₂-CH₂-CHCH₃-(CH₂)₂- , 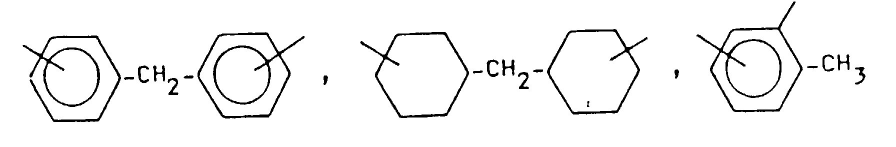 or 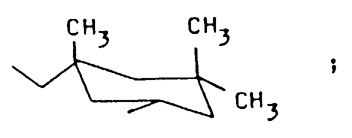 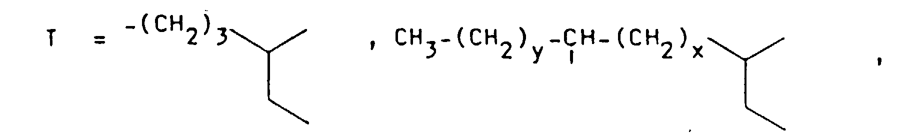 x = 1 or 2
y = 0 or 1 ... 16 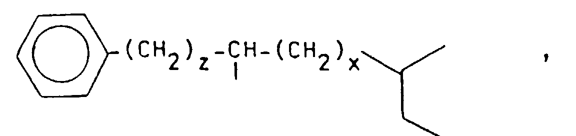 x = or 2
z = 0 or 1 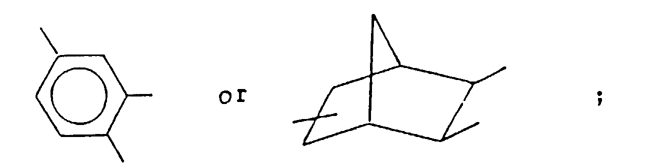 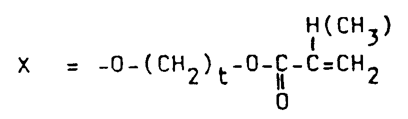 vhere t = 2,3 or 4 ;

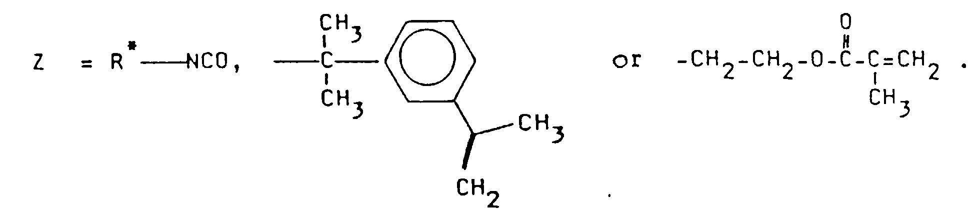

2. Process for the production of silicone imides according to claim 1, characterised in that in a first reaction step a diisocyanate of the formula OCN-R*-NCO, in which R* has the meaning indicated above, is reacted in a molar ratio of 1:2 with a blocking agent in the form of a compound exhibiting active hydrogen, and that the resulting blocked diisocyanate is then caused to react in a second reaction step, in a molar ratio from 1.1:1 to 2:1, with a silicone tetracarboxylic acid dianhydride of the general formula: 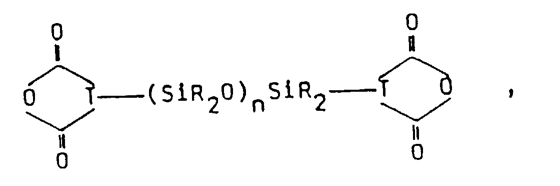 in which R, T and n have the meaning indicated above, to give an isocyanate-functional silicone imide.

3. Process for the production of silicone imides according to claim 1, characterised in that in a first reaction step a diisocyanate of the formula OCN-R*-NCO, in which R* has the meaning indicated above, is reacted in a molar ratio of 1:2 with a blocking agent in the form of a compound exhibiting active hydrogen, that the resulting blocked diisocyanate is then caused to react in a second reaction step, in a molar ratio from 1:1.1 to 1:2, with a silicone tetracarboxylic acid dianhydride of the general formula: 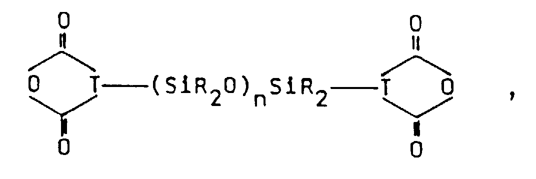 in which R, T and n have the meaning indicated above, to give an anhydride-functional silicone imide, and that the anhydride groups of this silicone imide are then caused to react at least in part with a hydroxyl-functional (meth)acrylate.

4. Process according to claim 3, characterised in that hydroxyethyl (meth)acrylate, hydroxypropyl (meth)acrylate or hydroxybutyl (meth)acrylate is used as the hydroxy-functional (meth)acrylate.

5. Process for the production of silicone imides according to claim 1, characterised in that in a first reaction step a diisocyanate of the formula OCN-R*-NCO, in which R* has the meaning indicated above, is reacted in a molar ratio of 1:2 with a blocking agent in the form of a compound exhibiting active hydrogen, that the resulting blocked diisocyanate is then caused to react In a second reaction step, in a molar ratio from 1:1.1 to 1:2, with a silicone tetracarboxylic acid dianhydride of the general formula: 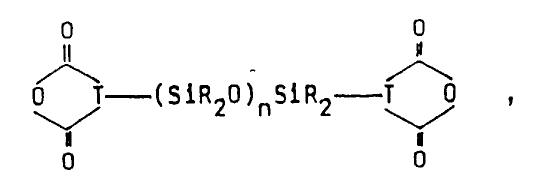 in which R, T and n have the meaning indicated above, to give an anhydride-functional silicone imide, and that the anhydride-functional silicone imide is then caused to react with a monoisocyanate that is blocked with a blocking agent in the form of a compound that exhibits active hydrogen and has the structure:

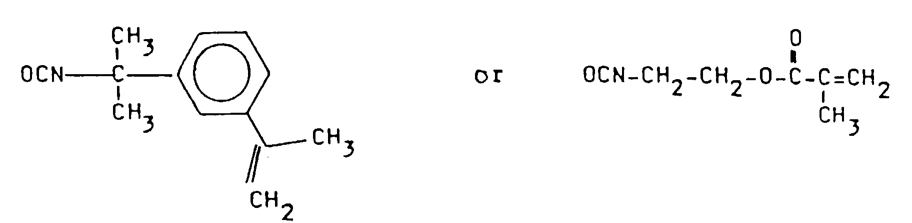

6. Process according to one of claims 2 to 5, characterised in that the diisocyanate used is hexamethylene diisocyanate, trimethylhexamethylene diisocyanate, diphenylmethane diisocyanate, dicyclohexylmethane diisocyanate, toluylene diisocyanate or isophorone diisocyanate.

7. Process for the production of silicone imides according to claim 1, characterised in that in a first reaction step a monoisocyanate of the structure 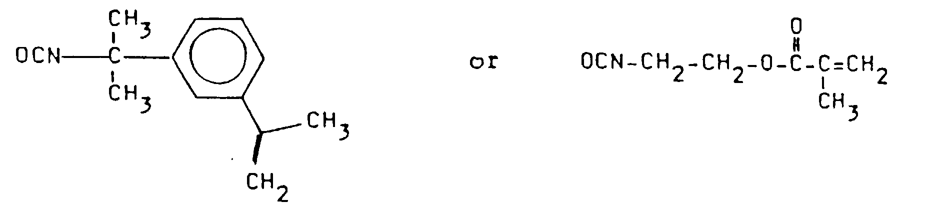 is reacted in a molar ratio of 1:1 with a blocking agent in the form of a compound exhibiting active hydrogen, and that the resulting blocked monoisocyanate is then caused to react in a second reaction step, in a molar ratio of 2:1, with a silicone tetracarboxylic acid dianhydride of the general formula: 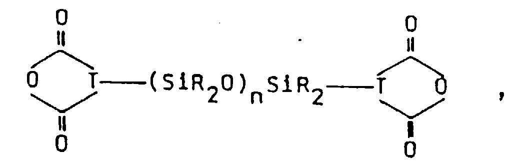 in which R, T and n have the meaning indicated above, to give a silicone imide.

8. Process according to one of claims 2 to 7, characterised in that the silicone tetracarboxylic acid dianhydride used is silicone bis-alkyl-succinic acid anhydride, silicone bis-norbornane dicarboxylic acid anhydride or silicone bis-phthalic acid anhydride.

## Revendications

1. Silicone imides présentant des groupements fonctionnels réticulables de formule générale 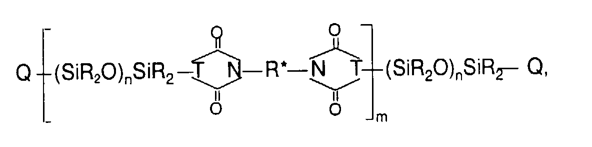 où Q = Q¹ OU Q²,
avec 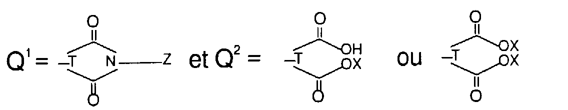
m est un nombre entier compris entre 0 et 10 (pour Q = Q¹) ou entre 1 et 10 (pour Q = Q²) et
n est un nombre entier compris entre 1 et 50,
et les valeurs suivantes s'appliquent aux groupements R, R*, T, X et Z
R = alkyle, cycloalkyle, aryle, aralkyle ou alkaryle;
R* = -(CH₂)₆- , -CH₂-C(CH₃)₂-CH₂-CHCH₃-(CH₂)₂-, 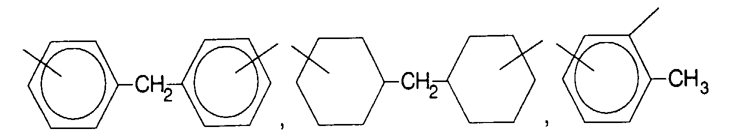 ou 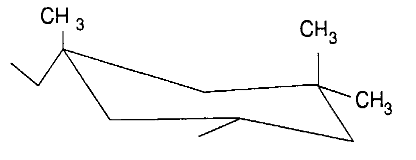 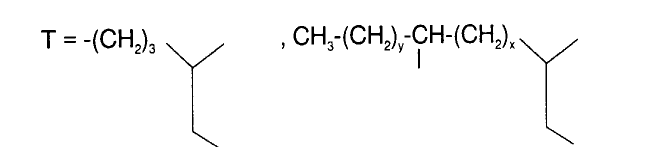 x = 1 ou 2
y = 0 ou 1 ... 16 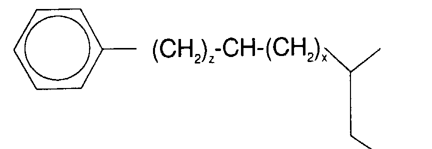 x = 1 ou 2
z = 0 ou 1 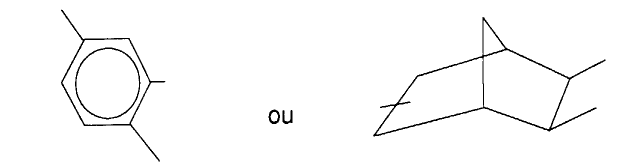 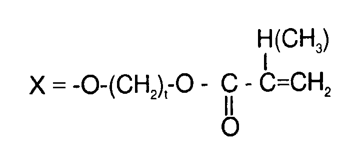 avec t = 2, 3 ou 4 ;

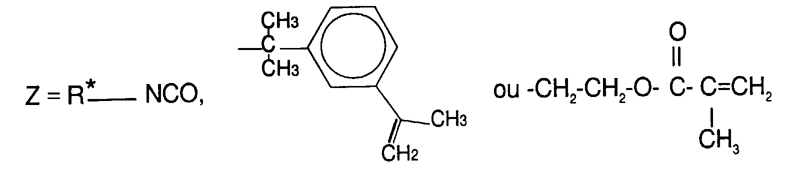

2. Procédé de fabrication de silicone imides selon la revendication 1, caractérisé en ce que, lors d'une première étape de réaction, un diisocyanate de formule OCN-R*-NCO, où R* a la signification indiquée ci-avant, est transformé avec un agent bloquant sous forme de composé présentant de l'hydrogène actif dans un rapport molaire de 1:2 et en ce que le diisocyanate bloqué ainsi obtenu est, lors d'une deuxième étape de réaction, transformé en silicone imide à groupement fonctionnel isocyanate dans un rapport molaire de 1,1:1 à 2:1 avec un dianhydride de tétracide carboxylique de silicone de formule générale 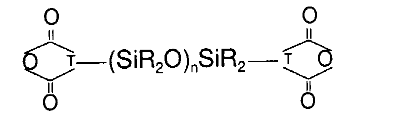 où R, T et n ont la signification indiquée ci-avant.

3. Procédé de fabrication de silicone imides selon la revendication 1, caractérisé en ce que, lors d'une première étape de réaction, un diisocyanate de formule OCN-R*-NCO, où R* a la signification indiquée ci-avant, est transformé avec un agent bloquant sous forme de composé présentant de l'hydrogène actif dans un rapport molaire de 1:2, en ce que le diisocyanate bloqué ainsi obtenu est, lors d'une deuxième étape de réaction, transformé en silicone imide à groupement fonctionnel anhydride dans un rapport molaire de 1:1,1 à 1:2 avec un dianhydride de tétracide carboxylique de silicone de formule générale 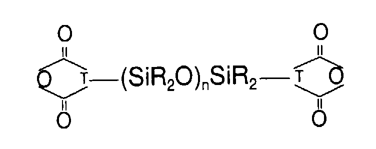 où R, T et n ont la signification indiquée ci-avant, et en ce que les groupements anhydride de ce silicone imide sont ensuite mis, au moins partiellement, en réaction avec un (méth)acrylate à groupement fonctionnel hydroxyle.

4. Procédé selon la revendication 3, caractérisé en ce que de l'hydroxyéthyl(méth)acrylate, de l'hydroxypropyl-(méth)acrylate ou de l'hydroxybutyl(méth)acrylate est utilisé comme (méth)acrylate à groupement fonctionnel hydroxyle.

5. Procédé de fabrication de silicone imides selon la revendication 1, caractérisé en ce que, lors d'une première étape de réaction, un diisocyanate de formule OCN-R*-NCO, où R* a la signification indiquée ci-avant, est transformé avec un agent bloquant sous forme de composé présentant de l'hydrogène actif dans un rapport molaire de 1:2, en ce que le diisocyanate bloqué ainsi obtenu est, lors d'une deuxième étape de réaction, transformé en silicone imide à groupement fonctionnel anhydride dans un rapport molaire de 1:1,1 à 1:2 avec un dianhydride de tétracide carboxylique de silicone de formule générale 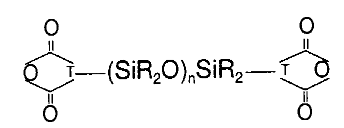 où R, T et n ont la signification indiquée ci-avant, et en ce que le silicone imide à groupement fonctionnel anhydride est ensuite mis en réaction avec un monoisocyanate - bloqué avec un agent bloquant sous forme de composé présentant de l'hydrogène actif - de structure

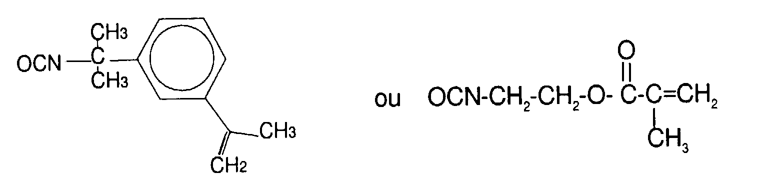

6. Procédé selon l'une des revendications 2 à 5, caractérisé en ce que de l'hexaméthylène diisocyanate, du triméthylhexaméthylène diisocyanate, du diphénylméthane diisocyanate, du dicyclohexylméthane diisocyanate, du toluylène diisocyanate ou du diisocyanate d'isophorone est utilisé comme diisocyanate.

7. Procédé de fabrication de silicone imides selon la revendication 1, caractérisé en ce que, lors d'une première étape de réaction, un monoisocyanate de structure 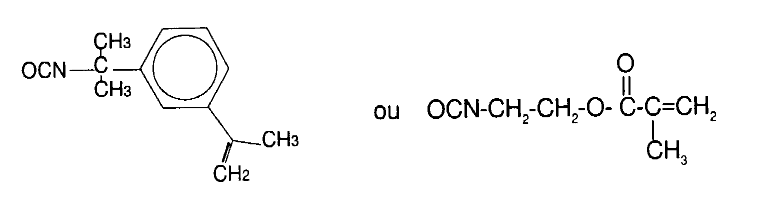 est transformé avec un agent bloquant sous forme de composé présentant de l'hydrogène actif dans un rapport molaire de 1:1 et en ce que le monoisocyanate bloqué ainsi obtenu est, lors d'une deuxième étape de réaction, transformé en silicone imide dans un rapport molaire de 2:1 avec un dianhydride de tétracide carboxylique de silicone de formule générale 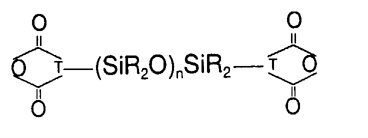 où R, T et n ont la signification indiquée ci-avant.

8. Procédé selon l'une des revendications 2 à 7, caractérisé en ce que du bis-(anhydride d'acide succinique d'alkyle) de silicone, du bis-(anhydride de diacide carboxylique de norbornane) de silicone ou du bis-(anhydride d'acide phthalique) de silicone est utilisé comme dianhydride de tétracide carboxylique de silicone.
